Europäisches Patentamt

European Patent Office

Office européen des brevets

(19)

(11) Numéro de publication: **0 131 518**
**B1**

(12) # FASCICULE DE BREVET EUROPEEN

(45) Date de publication du fascicule du brevet:
10.12.86

(51) Int. Cl.⁴: **B 62 D 7/16,** F 16 F 1/38

(21) Numéro de dépôt: 84401437.3

(22) Date de dépôt: 06.07.84

(54) Rotule élastique et son application aux suspensions de type "Mac PHERSON".

(30) Priorité: 08.07.83 FR 8311781

(43) Date de publication de la demande:
16.01.85 Bulletin 85/3

(45) Mention de la délivrance du brevet:
10.12.86 Bulletin 86/50

(84) Etats contractants désignés:
DE GB IT

(56) Documents cités:
EP - A - 0 060 733
FR - A - 1 251 719
FR - A - 1 404 841
FR - A - 1 432 449
FR - A - 1 566 575
FR - A - 2 098 010
FR - A - 2 335 744
FR - A - 2 434 965
GB - A - 1 021 358
US - A - 3 365 213
US - A - 3 467 421

(73) Titulaire: **AUTOMOBILES CITROEN, 62 Boulevard Victor-Hugo, F-92200 Neuilly-sur-Seine (FR)**
Titulaire: **AUTOMOBILES PEUGEOT, 75, avenue de la Grande Armée, F-75116 Paris (FR)**

(72) Inventeur: **Gryz, Gilbert, 135, Quater Route de Bondy, F-93600 Aulnay S/S Bois (FR)**

(74) Mandataire: **Boivin, Claude, 9, rue Edouard-Charton, F-78000 Versailles (FR)**

ACTORUM AG

## Description

La présente invention concerne une rotule élastique comprenant un fourreau externe solidaire d'un premier arbre et enveloppant une douille élastique adhérisée en forme de diabolo directement montée sur un axe d'articulation solidaire d'un second arbre, la douille élastique présentant, sur un secteur de sa circonférence, une encoche débouchante dont l'axe bissecteur est confondu avec l'axe du susdit premier arbre. Une rotule de ce genre est connue par exemple par le brevet US 3 365 213.

La rotule selon l'invention est caractérisé en ce que l'encoche est unique et ne s'étend que sensiblement sur la moitié de la longueur de la douille, la partie restante de la douille ne comportant pas d'encoche, et en ce que la douille est adhérisée uniquement à la paroi du fourreau ou uniquement à celle de l'axe d'articulation.

Lorsque, l'axe étant supposé fixe, un couple s'exerce dans un plan sensiblement parallèle au plan médian de l'encoche et s'applique sur un élément fixé au fourreau externe, cet élément pivote par rapport à l'axe d'articulation autour d'un axe dont la position dépend du sens du couple. Cette variation de la position de l'axe peut être utilisée avantageusement dans certains cas, notamment sur les essieux avant du type Mac PHERSON équipés d'une direction à timonerie haute.

La présente invention a donc également pour objet un essieu du type Mac PHERSON comprenant en position haute une bielle reliée à une timonerie de direction, caractérisé en ce que la bielle est reliée à la timonerie par une rotule élastique du type précité, l'axe d'articulation étant sensiblement vertical, et en ce que l'axe de la bielle se trouve sensiblement dans le plan médian axial de l'encoche, celle-ci étant prévue à la partie inférieure de la douille.

La variation de l'axe de pivotement de la bielle par rapport à la timonerie de direction permet de corriger la variation de pincement des roues du véhicule au cours des débattements de la suspension.

On a décrit ci-après, à titre d'exemple non limitatif, un mode de réalisation de l'articulation élastique et de l'essieu avant selon l'invention, avec référence aux dessins annexés dans lesquels:

la fig. 1 est une vue en coupe axiale de la rotule, en position neutre équilibrée;

la fig. 2 est une vue semblable à la fig 1, un couple de basculement étant exercé sur le fourreau de la rotule;

la fig. 3 est une vue semblable à la fig. 2, le couple étant dans le sens contraire;

la fig. 4 est une vue en coupe transversale suivant IV-IV de la fig. 1;

la fig. 5 est une vue en perspective d'un essieu avant muni de la rotule selon l'invention.

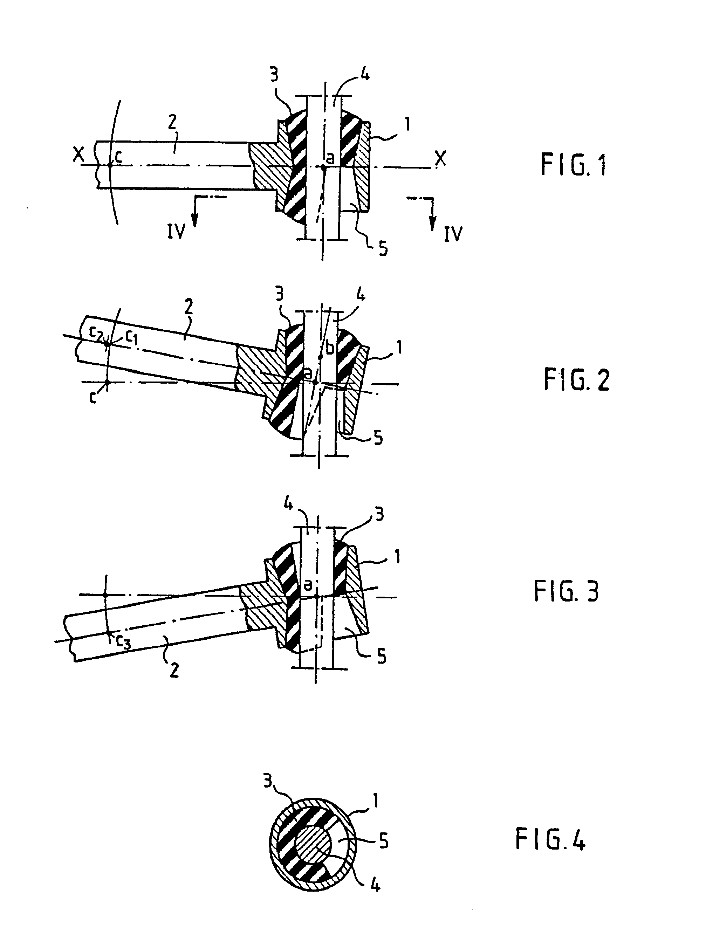

Telle qu'elle est représentée aux figures 1 à 4, la rotule élastique selon l'invention comporte un fourreau extérieur 1 qui est ici solidaire d'une biellette 2. L'alésage central de ce fourreau présente une forme de diabolo et enferme une douille élastique 3 de forme extérieure complémentaire, qui est adhérisée au fourreau 1. Un axe d'articulation 4 traverse cette douille en n'étant pas adhérisée à celle-ci. Dans sa moitié inférieure la douille 3 présente une encoche 5 qui s'étend angulairement sur sensiblement 90°, de part et d'autre de l'axe de symétrie de la biellette 2, derrière l'axe 4 par rapport à cette biellette. La moitié supérieure de la douille ne comporte pas d'encoche.

Lorsque, sous l'effet d'un couple exercé suivant un plan sensiblement parallèle au plan médian de l'encoche 5, la biellette 2 bascule vers le haut dans ce plan (fig. 2), les zones inférieures de la douille 3, situées en dessous du plan médian transversal X-X de cette dernière, ne s'opposent pas à ce mouvement. Cela est évident pour la zone inférieure de droite à la fig. 2, étant donné la présence de l'encoche 5. Mais il en est de même pour la zone inférieure de gauche, la masse élastique de la douille 3, qui n'est pas adhérisée sur l'axe 4, se décollant de cet axe. En revanche, les zones supérieures de la douille situées au-dessus du plan X-X, sont comprimées, celle de gauche essentiellement dans sa partie supérieure et celle de droite essentiellement dans sa partie inférieure.

La bielle 2, au lieu de pivoter autour de l'axe $\underline{a}$ passant par l'intersection de l'axe de la douille avec son plan médian transversal X-X pivote ainsi autour d'un axe $\underline{b}$ qui se trouve sensiblement à mi-hauteur des zones supérieures comprimées. Un point $\underline{c}$ de l'axe de la biellette 2 au lieu de venir en $c_1$, comme il le ferait avec une douille élastique classique, vient au point $c_2$ qui est plus loin de la rotule que le point $c_1$.

Lorsque la biellette 2 bascule vers le bas, toujours dans le plan médian de l'encoche 5 (fig. 3), la zone supérieure de gauche et la zone inférieure de droite de la douille 3 n'interviennent pas; dans la première la douille se décolle de l'axe 3 auquel elle n'est pas adhérisée alors que, dans la seconde, l'encoche 5 ne s'oppose évidemment pas à ce que la paroi du fourreau s'éloigne de cet axe. Tout se passe comme dans le cas d'une rotule élastique usuelle, c'est-à-dire que la bielle pivote autour de l'axe $\underline{a}$. Son point $\underline{c}$ vient en $c_3$ en restant à la même distance de l'axe $\underline{a}$.

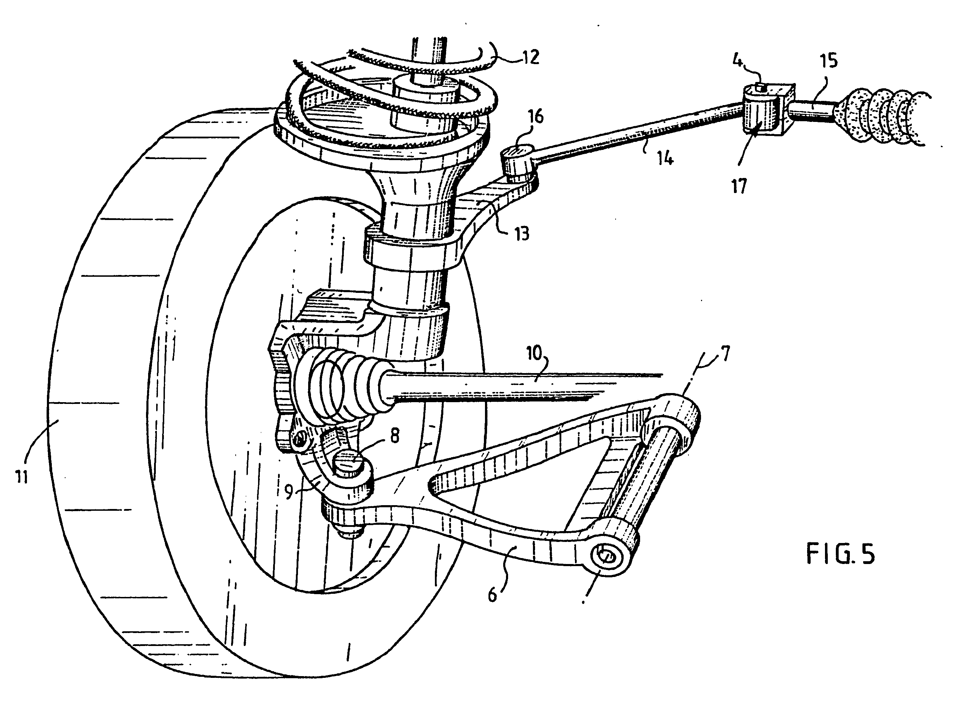

La rotule qui vient d'être décrite est particulièrement applicable aux essieux avant du type Mac PHERSON équipés d'une direction à timonerie haute. C'est ainsi qu'à la fig. 5 on voit un bras de support de roue 6 qui peut pivoter par rapport à la structure du véhicule autour d'un axe 7. Sur le bras 6 peut pivoter autour d'un axe 8 un porte-fusée 9 qui est relié à un arbre d'entraînement 109 et supporte la roue 11. Le porte-fusée 9, au-dessus duquel on voit en 12 le ressort de suspension, est solidaire à sa partie supérieure d'un levier de direction 13 qui est relié par une biellette 14 à la timonerie de commande de direction 15. La biellette 14 est reliée au levier 13 par une rotule 16 de type usuel et à la timonerie 15 par une rotule élastique selon l'invention qui est désignée au dessin d'une façon générale par la référence 17.

L'axe 4 de cette rotule est sensiblement vertical et comme cela est représenté aux figures 1 à 4, l'encoche 5 est prévue à la partie inférieure de la douille symétriquement par rapport au plan formé par l'axe 4 et l'axe de la biellette 14, derrière l'axe 4 par rapport à cette biellette.

L'élévation du point d'articulation de la biellette 14 par rapport à la timonerie 15, corrige la variation de pincement observée au niveau de la roue 11 au cours du débattement de la suspension.

Il va de soi que la présente invention ne doit pas être considérée comme limitée au mode de réalisation décrit et représenté, mais en couvre, au contraire, toutes les variantes. C'est ainsi que la douille 3 pourrait être adhérisée à l'axe 4 au lieu de l'être au fourreau 1.

**Revendications**

1. Rotule élastique comprenant un fourreau externe (1) solidaire d'un premier arbre (2) et enveloppant une douille élastique adhérisée (3) en forme de diabolo directement montée sur un axe d'articulation (4) solidaire d'un second arbre, la douille élastique (3) présentant, sur un secteur de sa circonférence, une encoche débouchante (5) dont l'axe bissecteur est confondu avec l'axe du susdit premier arbre (2), caractérisé en ce que l'encoche (5) est unique et ne s'étend que sensiblement sur la moitié de la longueur de la douille, la partie restante de la douille ne comportant pas d'encoche, et en ce que la douille (3) est adhérisée uniquement à la paroi du fourreau (1) ou uniquement à celle de l'axe d'articulation (4).

2. Essieu du type Mac PHERSON comprenant en position haute une bielle (14) reliée à une timonerie de direction (15), caractérisée en ce que la bielle est reliée à la timonerie par une rotule élastique telle que définie à la revendication 1, l'axe d'articulation (4) étant sensiblement vertical, et en ce que l'axe de la bielle (14) se trouve sensiblement dans le plan médian axial de l'encoche (5), celle-ci étant prévue à la partie inférieure de la douille (3).

**Patentansprüche**

1. Elastisches Kugelgelenk mit einer äusseren Hülse (1), die kraftschlüssig mit einer ersten Welle (2) verbunden ist und ein anhaftendes elastisches Futter (3) ummantelt, welches die Form eines Diabolo aufweist und direkt auf einem Gelenkbolzen (4) montiert ist, der kraftschlüssig mit einer zweiten Welle verbunden ist, wobei das elastische Futter (3) auf einem Sektor seines Umfangs eine sich öffnende Einkerbung (5) aufweist, deren halbierende Achse mit der Achse der besagten ersten Welle (2) zusammenfällt, dadurch gekennzeichnet, dass nur eine einzige Einkerbung (5) vorhanden ist, welche sich im wesentlichen nur über die Hälfte der Länge des Futters erstreckt, während der restliche Teil des Futters keine Einkerbung aufweist und dass das Futter (3) entweder nur an der Wand der Hülse (1) oder nur an der Wand des Gelenkbolzens (4) anhaftet.

2. Radachse vom Mac PHERSON-Typ mit einer in erhöhter Lage angeordneten Schubstange (14), die mit einem Richtungs-Lenkgestänge (15) verbunden ist, dadurch gekennzeichnet, dass die Schubstange mit dem Lenkgestänge über ein elastisches Kugelgelenk, wie es in Anspruch 1 definiert ist, verbunden ist, wobei der Gelenkbolzen (4) im wesentlichen vertikal angeordnet ist und dass die Achse der Schubstange (14) im wesentlichen in der axialen Mittelebene der im unteren Teil des Futters (3) vorgesehenen Einkerbung (5) liegt.

**Claims**

1. Elastic swivel joint comprising an external sleeve (1) integral with a first shaft (2) and enveloping a bonded elastic socket (3) in the form of a diabolo mounted directly on an articulation pin (4) integral with a second shaft, the elastic socket (3) having, on a sector of its circumference, an emergent recess (5) whose bisecting axis merges with the axis of said shaft (2), characterized in that there is only one recess (5) extending substantially over only half of the length of the socket, the remaining part of the socket not comprising any recess, and in that the socket (3) is bonded solely to the wall of the sleeve (1) or solely to that of the articulation pin (4).

2. Axle of the Mac PHERSON type comprising in a top position a link (14) connected to a steering linkage (15) characterized in that the link is connected to the linkage by an elastic swivel joint such as defined in claim 1, the articulation pin (4) being substantially vertical and in that the axis of the link (14) is situated substantially in the median axial plane of the recess (5), this latter being provided at the lower part of the socket (3).

FIG. 1

FIG. 2

FIG. 3

FIG. 4

FIG.5

0 131 518